Europäisches Patentamt

(19) European Patent Office

Office européen des brevets

(11) Numéro de publication: **0 288 405**
**A2**

(12) # DEMANDE DE BREVET EUROPEEN

(21) Numéro de dépôt: 88430007.0

(22) Date de dépôt: 20.04.88

(51) Int. Cl.⁴: **A 23 L 1/313**
**A 23 B 4/00, A 23 L 1/01**

(30) Priorité: 21.04.87 FR 8705729

(43) Date de publication de la demande:
26.10.88 Bulletin 88/43

(84) Etats contractants désignés: **DE ES IT NL**

(71) Demandeur: **Combes, André**
**22, Avenue des Rocailles**
**F-83700 Saint-Raphael (FR)**

(72) Inventeur: **Combes, André**
**22, Avenue des Rocailles**
**F-83700 Saint-Raphael (FR)**

(74) Mandataire: **Robineau, Bernard**
**Château de St Félix de Pallières**
**F-30140 Anduze (FR)**

(54) **Procédé de préparation d'une composition d'addition pour produits d'alimentation humaine.**

(57) Procédé de préparation d'une composition pour produits d'alimentation humaine.

On chauffe en milieu aqueux des matières animales constituées de parties de muscles, de parties de cartilages, de parties d'os et de parties de gras à une température comprise entre 80 et 130° C, pendant des temps compris entre 8 et 20 heures, puis on met à décanter les graisses et l'on concentre par évaporation.

Application de la composition dans l'industrie de la conserverie, de la charcuterie, des salaisons et des plats cuisinés.

EP 0 288 405 A2

## Description

## PROCEDE DE PREPARATION D'UNE COMPOSITION D'ADDITION POUR PRODUITS D'ALIMENTATION HUMAINE

La présente invention concerne une composition d'addition d'origine naturelle pour produits d'alimentation humaine contenant ou non des produits carnés, son procédé de préparation et son application notamment dans l'industrie de la conserverie, de la charcuterie, des salaisons et des plats cuisinés.

Il est connu que les produits carnés utilisés dans l'industrie de la conserverie subissent en cours de leur mise en oeuvre des traitements physiques et chimiques variables selon le type de produit carné ( viande de boeuf, de poulet ...) et selon les traitements subis par l'animal vivant avant son abattage tels que le mode et la qualité de la nourriture, l'addition de produits divers à l'alimentation, ( hormones, vitamines, sels minéraux etc... ), le mode d'élevage ( stabulation, en plein air etc...). L'objectif de ces traitements est multiple; tout d'abord réguler l'évolution du produit carné au cours de sa transformation et de sa conservation de sorte qu'il garde ses caractères comestibles et gustatifs et ensuite conférer ou conserver au produit final des caractéristiques recherchées telles que: la couleur, l'aspect, la saveur et la tenue.

Le principal traitement physico-chimique des produits carnés est le traitement au sel. En dehors de la mise en contact du produit carné frais avec le chlorure de sodium, l'industrie a pris l'habitude de mettre en contact simultanément d'autres produits que le sel. Parmi ces produits à action spécifique on peut citer les nitrates qui transformés en nitrites dans le milieu carné réagissent selon les auteurs, avec l'hémoglobine pour donner une coloration attractive plus ou moins stable au produit carné; des polyphosphates dont le but est d'améliorer la rétention d'eau du milieu et d'éviter son désséche-ment; des sucres réducteurs dont la fonction est de modifier le pH par fermentation; des carbonates; des ferments lactiques; des glutamates; des acétates; des aluns; des sulfates; de la gélatine etc...

La fonction de ces produits n'est pas toujours clairement élucidés et l'on aboutit par empirisme à des formulations très complexes. Voir à ce sujet: René PALLU " La charcuterie en France ", tome 1 et 2, 1956, Ed R.PALLU, Paris.

Un deuxième traitement assez général des produits carnés est le traitement au moyen d'un phosphate dont le rôle est reconnu comme favorable à la présentation du produit fabriqué.

De nombreux reproches sont faits à l'utilisation de certains de ces additifs compte tenu de leur action ou de leur toxicité pour le consommateur, en particulier le nitrite et le nitrate, au point que les législations des prochaines années réduiront ou interdiront l'utilisation de tels produits.

En plus , les produits carnés actuels de départ ont été modifiés du vivant de l'animal par des méthodes de nourriture et produits d'appoint de développement du muscle, si bien que le produit de départ est variable selon le fournisseur et qu'ensuite les traitements décrits ci-dessus appliqués à ces produits fournissent un résultat insuffisant sur la préparation finale surtout en ce qui concerne sa saveur et ses caractéristiques gustatives.

L'industrie recherche donc des compositions susceptibles d'éviter l'utilisation de produits d'addition dangereux pour les humains, de préférence d'origine naturelle, capable d'améliorer la saveur, la couleur, la rétention d'eau et la tenue des produits carnés finis et de favoriser et de renforcer l'action d'additifs spécifiques.

Par ailleurs, d'une manière générale, l'industrie de l'alimentation humaine recherche des compositions d'addition d'origine naturelle, à forte valeur en protéines, susceptibles d'améliorer ou de modifier les caractères gustatifs d'une préparation et d'influer sur les carences en protéines.

La présente invention concerne donc une composition d'addition d'origine naturelle pour produits d'alimentation humaine contenant ou non des produits carnés, son procédé de fabrication et son application notamment dans l'industrie de la conserverie, de la charcuterie, des salaisons et des plats cuisinés.

Par compositions d'addition, on entend des compositions qui, ajoutées aux produits d'alimentation humaine selon des procédés connus, à des teneurs relativement faibles et ne modifant pas sensiblement les teneurs pondérales des éléments majeurs, restaurent, modifient, ou amplifient certaines caractéristiques d'aspect, de conservation, de saveur ou de nutrition.

Par composition d'origine naturelle, on entend une composition dont les produits de départ sont naturels et qui ne subissent que des traitements physiques et thermiques en dehors de tout ajout de réactif chimique ou biochimique susceptible d'entrer en réaction avec eux tels que des acides, des bases, des enzymes.

Par produit d'alimentation humaine on entend des produits habituellement absorbés par voie orale tels que des produits carnés ou des préparations qui en sont issues, des produits à base de légumes, de farines, de féculents et leurs mélanges.

Par produits carnés on entend des produits d'origine animale contenant en particulier du muscle et du gras et ayant subi une transformation plus ou moins profonde par la main de l'homme tels que des viandes rouges ou blanches, des jambons cruis ou cuits, des saucissons, des saucisses, des pâtés etc., et des plats cuisinés contenant de la viande ou des produits issus de la viande.

Les termes de conserverie, charcuterie, salaisons et plats cuisinés sont bien connus en soi et il n'est pas besoin de les expliciter plus amplement.

La composition d'addition de l'invention est obtenue par traitement physique d'une matière animale de départ comprenant des parties de muscle, des parties de cartilage, des parties osseuses et des parties de gras animal auxquelles on ajoute habituellement des parties d'abats. Les parties de muscle, de cartilage, d'os et de gras sont habituellement constituées par les " bas morceaux " qui sont généralement peu ou mal valorisés par le négoce des viandes et les parties d'abats comprennent habituellement le foie, la rate, les rognons, les poumons etc.

Les rapports pondéraux des parties de muscle, des parties de cartilage, des parties osseuses et des parties de gras sont habituellement ceux des " bas morceaux " et ils varient en fonction du type et de la race d'animal utilisé ( boeuf, mouton, porc etc. ), mais aussi de la méthode de traitement des carcasses ( manuelle ou mécanique ), de l'habileté des opérateurs et de l'aptitude du marché des consommateurs à absorber plus ou moins de morceaux moins nobles. Toutefois il est essentiel qu'il y ait en présence en quantité non négligeable des parties de muscle, de cartilage, d'os et de gras animal; les meilleurs rapports pondéraux sont ceux que l'on trouve habituellement sur une carcasse une fois enlevés les morceaux nobles sans pour autant que ces rapports puissent être définis d'une façon très précise.

Bien entendu, il est possible de mélanger des bas morceaux provenant d'animaux de types ou de races différentes. Il est également possible d'enrichir le mélange de départ en l'une quelconque de ses parties s'il y a un déficit.

A titre d'exemple, un atelier de découpe de boucherie ( viande de porc, de boeuf et de mouton ) fournit pour 100 Kgs de viande abattue ( hors les abats ) :
- 67 Kgs de chair musculaire
- 22 Kgs d'os et d'aponévrose ( cartilage )
- 11 Kgs de gras
Sur les 67 Kgs de chair musculaire, globalement selon les variations saisonnières, 13 à 20 Kgs sont les bas morceaux.

Le rapport pondéral entre les " bas morceaux " et les abats n'est pas critique et il est variable en fonction de la constitution des animaux de départ. Toutefois on préfère que le poids d'abats rapporté au poids des bas morceaux n'excède pas celui contenu habituellement dans la carcasse et il est généralement compris entre 0,1 et 5%.

· Le traitement physique de la présente invention comprend des opérations du traitement thermique, des opérations de purification puis de concentration.

Le traitement thermique comprend le chauffage en autoclave fermé de la matière première de départ en milieu aqueux. Le milieu aqueux comprend de préférence en plus de l'eau, du chlorure de sodium afin d'améliorer la conservation du produit mais il n'est pas indispensable au niveau du procédé. On préfère un rapport pondéral du chlorure de sodium à la matière solide chargée compris entre 0,1 et 4% de préférence voisin de 2,5% de la charge animale.

Le rapport pondéral de la matière première à l'eau n'est pas critique; toutefois il sera le plus élevé possible compatible avec l'appareillage et la bonne conduite des opérations. On préfère habituellement que le rapport soit de l'ordre de 4.

L'intervalle de température utilisé va de 80°C à 130°C et l'on procède par paliers successifs de température dans l'intervalle défini; bien entendu la pression interne dans l'autoclave varie en fonction de la température.

La durée de traitement pour les températures définies ci-dessus est habituellement comprise entre 8 et 20 heures, de préférence entre 12 et 15 heures sans que cet intervalle soit limitatif, toutefois il est souhaitable que la durée de traitement faite entre 80°C et 110°C représente environ les deux tiers de la durée totale de l'opération, le temps de séjour à la température maximale étant le plus réduit possible.

La température est ramenée vers 30°C par refroidissement et l'on décomprime l'autoclave.

En fin de traitement, on sépare le jus liquide d'avec le solide et le jus est mis à décanter de préférence à froid pour fournir une phase aqueuse colorée sous jacente et une phase solide surnageante constituée essentiellement de matières grasses. On soutire le jus aqueux que l'on filtre ou centrifuge à froid pour obtenir la composition de l'invention.

Le produit est en général concentrée par ébullition modérée, le cas échéant sous vide, pour former une pâte; ou bien on peut le conditionner à l'état solide sous forme de poudre, au moyen d'une atomisation ou d'un séchage flash.

Des analyses sur le produit pâteux à extrait sec compris entre 60% et 70% fournissent les résultats suivants ramenés en poids de sec.

1.Contrôle bactériologique
- Négatif au moment de la préparation du produit
- Des échantillons de produits pâteux à 70% d'extrait sec préparés en présence de chlorure de sodium ( 2,5% en poids de la charge solide introduit à l'autoclave ) ont été coulés dans des tubes à essai et abandonnés ouvert dans une atmosphère d'atelier de boucherie dont la température varie en fonction des saisons entre 5°C et 30°C pendant 2 ans sans qu'il se produise un développement de bactérie ou de champignon.

2.Analyses pondérales et chimiques ( produit préparé en présence de 2,5% en poids de chlorure de sodium ). - Taux de cendre    10% à 16%
- Teneur en protéines    35% à 50%
- Calcium    0 à 4mg/100g
- Phosphore    40 à 80mg/100g
- Matières grasses    0,2% à 2,5%

3.Caractéristiques physiques
Produit plus ou moins pâteux ou visqueux, de coloration brune, à odeur de viande prononcée variable en fonction de la matière première de départ, soluble à l'eau en toutes proportions à température ambiante, soluble en toutes proportions dans une solution aqueuse de chlorure de sodium à 2%.

La poudre obtenue par atomisation présente une coloration beige.

La composition de la présente invention trouve son application en tant que produit d'addition dans des compositions d'alimentation humaine en particulier, elle convient bien en tant que produit d'addition pour produits carnés subissant des transformations.

Elle est utilisée seule ou en mélange avec d'autres produits d'addition conventionnels dans l'industrie de la charcuterie, de la conserverie, des salaisons et des plats cuisinés, tels que des aromates, des épices, des produits de saveur, des agents de conservation, des agents colorants, des agents destinés à réguler l'activité bactérienne ou enzymatique etc. Utilisée seule dans une préparation à base de produit carné, la composition de l'invention permet d'une manière générale d'améliorer le goût et la saveur des préparations, une amélioration du rendement pondéral ( défini comme le rapport du poids de produit carné obtenu après préparation au poids de produit carné de départ ) et une meilleure tenue d'ensemble comme c'est notamment le cas dans la préparation des jambons cuits ou crus.

Utilisée dans les plats cuisinés sans produits carnés ( légumes, féculents ) la composition fournit une saveur de produit carné recherchée et permet un apport notamment de protéines.

L'invention est illustrée à l'aide des exemples non limitatifs suivants, les parties étant exprimées en poids.

Exemple 1. Préparation d'une composition d'addition de l'invention à base de viandes diverses.

Des carcasses de boeuf, de porc, et de mouton, une fois débarassées des morceaux nobles fournissent pour 100 parties de départ, 50 parties de bas morceaux, d'os, d'aponévrose et graisses.

On introduit 500 Kgs de ce mélange plus 25 Kgs d'abats divers, toutes viandes confondues dans un autoclave d'une capacité de 800 litres muni d'une double enveloppe. On ajoute ensuite 10 Kgs de sel et 125 litres d'eau; on ferme l'autoclave et on porte la température à 80°C en une heur. On maintient cette température pendant 5 heures puis on porte à 110°C en une heure et maintient à 110°C pendant trois heures. On élève ensuite à 120°C en une heure et maintient deux heures à 120°C. On refroidit ensuite à 50°C en deux heures et on décompresse. On soutire le liquide et on l'envoie dans des bacs de décantation; on décante en chambre froide à +3°C pendant 24 heures. La masse solide grasse qui surnage est épuisée et le liquide brun restant est concentré à 105°C à pression atmosphérique jusqu'à l'obtention d'un extrait sec de 65%. Le rendement est de 7% de produit à 65% d'extrait sec par rapport au poids de matière solide chargée.

Analyses du produit en % de sec
- Protéine    40,3 %
- Lipides    0,2 %
- Calcium    3,7 mg/100g
- Phosphore    40 mg/100g
- Taux de cendre    15,9 %

Exemple 2. Application de la composition dans le saumurage des jambons à cuire

On prépare une solution de saumure de pompage de composition suivante pour 100 litres d'eau:
- Salpêtre    0,600 Kgs
- Sucre    0,700 Kgs

- Dextrose    0,300 Kgs
- Sel    20,000 Kgs
- Aromates    0,100 Kgs

On obtient une concentration de 16° BAUME. Cette solution sert de solution de référence.

Par ailleurs on prépare une deuxième solution selon l'invention à partir de la solution de référence en lui ajoutant 1 Kgs du concentré de l'exemple 1 pour 100 litres de solution.

On injecte des jambons frais de qualité supérieure au moyen des deux solutions précédentes à raison de 20% en poids de jambon de solution d'injection, sur un dispositif d'injection à aiguilles.

On place les jambons en poches à cuisson et l'on cuit sous vide à 68°C pendant 9 heures.

Au test de dégustation du jambon, la saveur et le goût du jambon traité avec la solution de l'invention sont nettement renforcés, constant dans la masse, son aspect visuel est plus attractif, sa tenue de coupe meilleure et son rendement à la cuisson est de 97% alors qu'il est de 93% avec la solution de référence.

Conversation des jambons

On place des jambons traités selon l'invention et selon la composition de référence dans une chambre froide à +3°C.

Au bout de un mois à deux mois, les jambons de référence secrétent un mucilage de couleur grisâtre rhédibitoire pour la valeur marchande du produit.

Par contre les jambons traités selon l'invention se conservent avec un aspect inchangé au pire pendant six mois pour quelques échantillons et au moins pendant un an dans la plupart des cas.

Exemple 3. Application de la composition pour la fabrication d'un plat cuisiné en conserve.

Dans une boîte de conserve de 4/4, on introduit:
- 200 g de viande de boeuf
- 400 g de légumes ( haricots, oignons, carottes )
- 200 g d'eau
- sel et épices qsp et 5 g de composition de l'invention de l'exemple 1.

Par ailleurs on procède à un essai comparatif sans composition de l'invention. On traite les boîtes selon les techniques de la conserverie. A la dégustation la viande de la boîte traitée selon l'invention présente une saveur et un aspect très supérieurs à ceux de la viande témoin. Même une viande témoin qui aurait été cuisinée au préalable avant la mise en conserve ne présente pas les mêmes caractéristiques de saveur.

**Revendications**

- REVENDICATION 1 : Procédé de préparation d'une composition d'origine naturelle pour produits d'alimentation humaine à extrait sec d'au moins 65 % en poids et d'une teneur en protéines d'au moins 45 % en poids caractérisé en ce que l'on chauffe en milieu aqueux des matières animales constituées de parties de muscle, de parties de cartilage, de parties d'os et de parties de gras à une température comprise entre 80° C et 130° C pendant des temps compris entre 8 et 20 heures, de préférence entre 12 et 15 heures, puis on refroidit; en ce que l'on sépare et met à décanter les graisses; en ce que l'on concentre par évaporation.

- REVENDICATION 2 : Procédé selon la revendication N° 1 caractérisé en ce qu'en plus, les matières animals contiennent des abats en quantité comprise entre 0,1 et 5 % en poids, des parties de muscles, d'os et de cartilages.

- REVENDICATION 3 : Procédé selon une des revendications caractérisé en ce que l'on chauffe en présence de chlorure de sodium en quantité comprise entre 0,1 et 4 % en poids, de préférence voisine de 2,5 % de la matière animale.

- REVENDICATION 4 : Application de la composition selon une des revendications précédentes dans l'industrie de la conserverie, de la charcuterie, des salaisons et des plats cuisinés.